Europäisches Patentamt

European Patent Office

Office européen des brevets

(19)

(11) **EP 0 567 068 B1**

(12) **EUROPEAN PATENT SPECIFICATION**

(45) Date of publication and mention
of the grant of the patent:
**07.01.1999 Bulletin 1999/01**

(51) Int Cl.⁶: **G10L 5/00**, G10L 9/14,
G10L 9/18

(21) Application number: **93106380.4**

(22) Date of filing: **20.04.1993**

(54) **Speech signal encoder/decoder device in mobile communication**

Kodier-/Dekodiergerät für Sprachsignale bei mobiler Kommunikation

Dispositif de codage/décodage de signaux de parole dans une communication mobile

(84) Designated Contracting States:
**DE GB NL SE**

(30) Priority: **21.04.1992 JP 100086/92**
**23.04.1992 JP 130109/92**

(43) Date of publication of application:
**27.10.1993 Bulletin 1993/43**

(73) Proprietor: **NEC CORPORATION**
**Tokyo (JP)**

(72) Inventor: **Unno, Yoshihiro, c/o NEC Corporation**
**Tokyo (JP)**

(74) Representative: **VOSSIUS & PARTNER**
**Postfach 86 07 67**
**81634 München (DE)**

(56) References cited:
**EP-A- 476 614**      **WO-A-89/12292**
**DE-A- 4 013 395**

## Description

The present invention relates to a speech signal encoder/decoder device in mobile communication, and more specifically to a speech signal encoder/decoder device in mobile communication for use in a cellular automobile telephone system in which transmission lines are inevitably switched during the communication.

A cellular automobile telephone system offers its service area divided into a plurality of small radio zones. Each radio zone includes at least one radio base station which sets a communication channel between it and a mobile station. In such a cellular automobile telephone system, each radio zone is reduced in its size to enjoy less transmission power of radio equipment which corresponds to the size of the radio zone, and further repetitive use is made of signals of the same frequency for effective use of frequencies in radio zones which are isolated from each other by distances where no deterioration of communication quality is produced owing to interferences of signals of the same frequency.

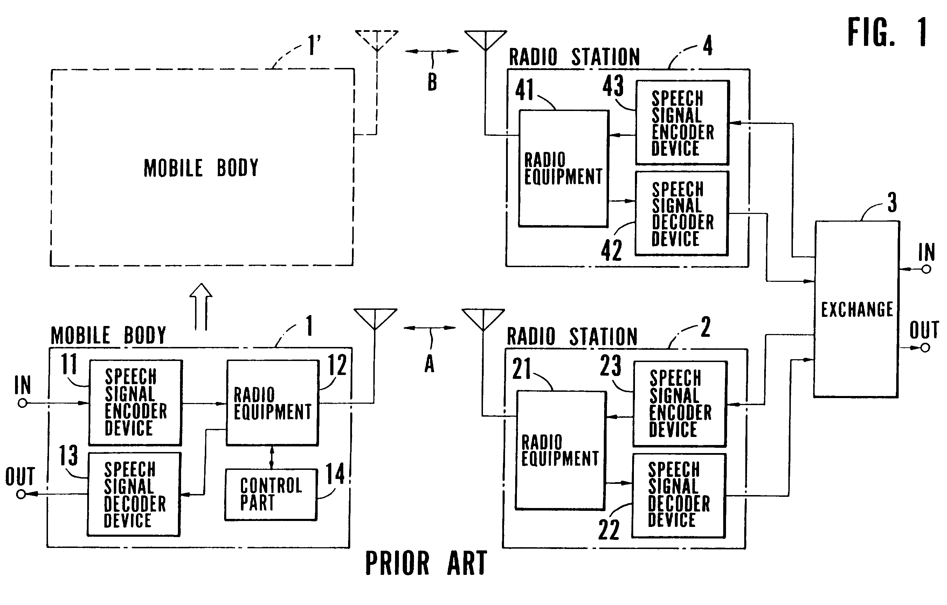

Referring to FIG. 1 an outline of a cellular automobile telephone system of the type described above is illustrated.

A mobile body 1 performs speech communication through a radio station through a code transmission channel A. An input speech from a speech input terminal IN is encoded by a speech signal encoder device 11 in the mobile body 1 and transmitted to the radio station 2 from radio equipment 12.

The speech signal encoder device 11 includes a system known as being used in a North American cellular automobile telephone system using an algorithm, one version of a CELP (Code Excited Linear Predictive Coder) system, wherein a 64 kbps speech signal transmitted from an exchange is divided into 20 ms frames, and is converted into a 6.7 kbps speech signal by extracting the feature of the original transmitted speech signal for each frame.

The speech signal encoder device 11 further includes an European cellular automobile telephone system as another speech signal encoder device using an algorithm of RPE-LTP (Regular Pulse Excited with Long Term Predictive Coder), wherein a speech signal is divided into 20 ms frames as in the aforementioned North American cellular system, and is converted to a 13 kbps speed signal by extracting the feature of the original speech signal for each frame. Such a speech signal possesses as its chief features a speech spectral envelope component, a pitch component, and an excitation signal, and transmission information is compressed by encoding each feature component with minimum information. The speech signal is regenerated such that since a transmission signal has been encoded, divided into the speech spectrum envelpe component, pitch component, and excitation signal as described above, the excitation signal is first decoded in the speech decoder device 13 in conformity with a predetermined decoding technique, and then the pitch component is regenerated by applying the transmission signal to a digital filter representative of the pitch component, and finally the spectral envelope component is regenerated by applying the transmission signal to a digital filter representative of the spectral envelope component.

The encoded speech signal received by radio equipment 21 in the radio station is encoded by a speech signal decoder device 22 into the speech signal, and is transferred to the exchange 3.

In contrast, the speech signal from the exchange 3 is encoded by a speech signal encoder device 23 in the radio station 2, and is sent from radio equipment 21. The encoded speech signal sent to the mobile body 1 through the transmission channel A is received by the radio equipment 12 and is decoded by a speech signal decoder device 13 into a regenerated speech signal, and is taken out from a speech output terminal OUT.

In this situation, as the mobile body 1 moves to another location, say, the location of a mobile body 1', the mobile body 1 is switched in its associated code transmission lines from a state where the mobile body 1 performs speech communication through the transmission line A to a state where it performs the speech transmission through the code transmission channel B.

The radio station 2, which is now to switch the code tansmission channels mediating the signal from the mobile body 1 or 1', monitors at all times the state of electric waves transmitted from the mobile body 1. The monitoring is generally done by observing electric field intensity, or may be done by utilizing other parameters, say, the rate of variations of fading.

With the state of the electric waves being deteriorated, the radio station 2 requires the exchange 3 to switch the present transmission channel A to another transmission channel. The exchange 3, which receives the request, instructs a radio station 4 to monitor the state of the radio waves from the mobile body 1 or 1'. As the radio station 4 judges the state of the radio waves monitored thereby to be satisfactory compared with the state of the radio waves monitored by the radio station 2, the exchange 3 issues a switching control signal to switch the channels, to the mobile body 1 or 1' through the radio station 2.

The control signal is detected by a control section 14, whereby the radio equipment 12 is switched in its radio frequency to a channel corresponding to the radio station 4. The radio station , which is with the same construction as that of the radio station 2, starts to send a silent signal to the exchange 3 a predetermined interval before a switching timing when the switching is performed, and once, after the switching, a speech code is received by the radio equipment 41, the speech code is decoded in a speech signal decoder device 42 and a regenerated speech signal is transmitted to the exchange 3.

The speech signal decoder device 22 in the radio station 2, once the transmission channels have been switched and the speech code is not transmitted thereto, interrupts its decoding without delay and issues a silent signal to the exchange 3.

The exchange 3 initially selects the speech signal from the radio station 2 and transfers it to the transmission channel output terminal OUT. Thereafter, it synthesizes the speech signal from the radio station 2 and the speech signal from the radio station 4 in a certain interval around the time the channel switching is performed, and transmits the synthesized signal to the transmission channel output terminal OUT. Further, the exchange 3 selects the signal from the radio station 4 and transfers it to the transmission channel output terminal OUT.

The exchange 3 initially transfers a speech signal inputted through a transmission channel input terminal IN to the radio station 2 which required the switching of the transmission channels, but thereafter it transfers the speech signal to the radio station 4 for which switching is to be performed.

Such a prior art system has a difficulty that speech quality is deteriorated owing to instantaneous interruption of a speech signal because the switching of the code transmission channels is performed during a speech irrespective of the operation of a speech signal encoder/decoder device.

To solve the difficulties with the prior art, it is an object of the present invention to provide a speech signal encoder/decoder system in mobile communication capable of ensuring a satisfactory speech signal even though code transmission channels are switched during communication.

This object is achieved by means of a speech signal encoder/decoder system as set forth in claim 1.

To achieve the above object, a speech signal encoder/decoder system in mobile communication is to transmit an encoded speech signal to a transmission channel by encoding an input speech signal in conformity with a predetermined encoding procedure and transmitting it to the transmission channel, and including initialization means for initializing a memory circuit for decoding a speech in response to the switching of the transmission channels.

In accordance with a speech signal encoder/decoder system in mobile communication, the present invention is adapted to receive and decode speech information from a transmission channel in conformity with a predetermined decoding procedure and output a regenerated speech signal, and include initialization means for initializing a memory circuit, which serves to decode a speech, in response to switching of said transmission channel and extrapolation means for extrapolating the speech signal using past received code in response to the switching of the transmission channel.

FIG. 1 is a block diagram illustrating in an exemplified manner a prior art speech signal encoder/decoder device in mobile communication;

FIG. 2 is a block diagram illustrating an embodiment of a speech signal encoder/decoder device in mobile communication according to the present invention.

FIG. 3 is a block diagram illustrating a speech signal encoder device in the speech signal encoder/decoder device of FIG. 2;

FIG. 4 is a block diagram illustrating a speech signal decoder device of the speech signal encoder/decoder device of FIG. 2;

FIG. 5 is a timing chart illustrating timings of initialization and extrapolation in the present invention.

In the following, a principle of the present invention will be described prior to the description of a preferred embodiment of the present invention.

A speech signal decoded by a speech signal decoder device not only determines a regenerated speech signal only depending upon an encoded signal received presently but also it reflects an influence of past received codes. The speech signal encoded by a speech signal encoder device of a mobile body is decoded through different speech signal decoder devices before and after the switching of transmission channels. Thereupon, the speech signal decoder device to be switched in its communication channel fails to reflect the influence of past received codes and hence brings about discontinuity of the speech signal. Accordingly, in the case where channel switching is performed and a code to be sent to a new speech signal encoder device is estimated, the speech encoder device of a mobile body is initialized to eliminate the influence of past speech codes, and thereafter encoded.

Further, since the speech signal decoder device of a mobile body decodes a speech code encoded by a different speech signal encoder device, the speech signal decoder device fails to correctly reflect the influence of past received codes owing to the switching of the channel. In order to generate intentionally the influence of the past speech encoding after the transmission channel is switched, the present invention is adapted to extrapolate a speech signal using past received codes with the aid of an extrapolation circuit. The present invention further improves the quality of the speech signal in view of the sense of hearing by weighted synthesis of an extrapolated signal by the extrapolation circuit and a regenerated signal. In what follows, a preferred embodiment of the present invention will be described with reference to the accompanying drawings.

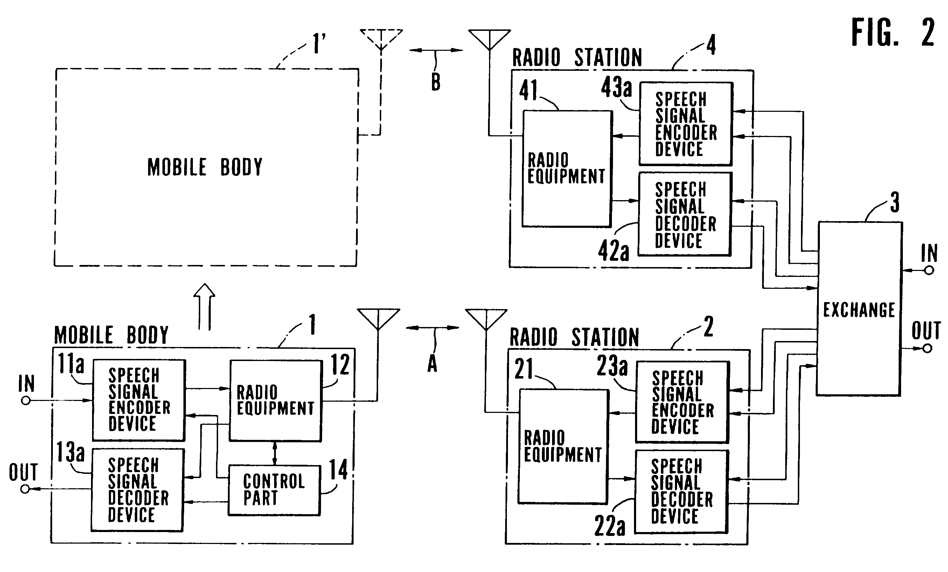

Referring to FIG. 2, there is illustrated an embodiment of a speech signal encoder/decoder device according to the present invention in the form of a block diagram.

A basic circuit construction of the speech signal encoder/decoder device of the present invention is identical to the prior art speech signal encoder/decoder device of FIG. 1, but is different in circuit constructions of speech signal encoder devices and speech signal decoder devices in a mobile body and a radio station.

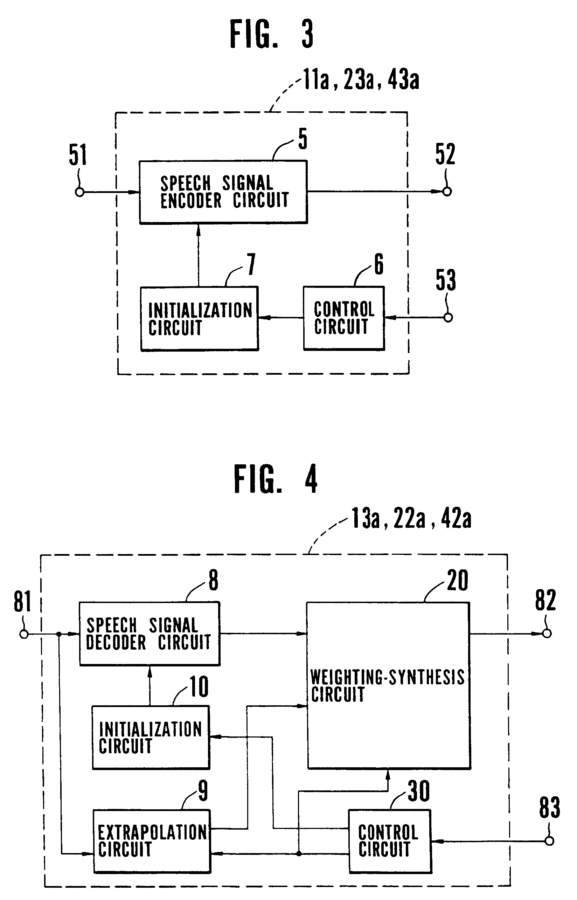

Referring to FIG. 3, there is illustrated in a block diagram an embodiment of the speech signal encoder device 11a, 23a, 43a of FIG. 2. A speech signal decoder circuit 5 receives a discrete speech signal from an input terminal 51 and encodes the same with use of a predetermined encoding procedure and transmits a resulting speech code to an output terminal 52. The speech signal encoder circuit 5 is constructed in the same manner as in the prior art encoder device 11 illustrated in FIG. 1.

A control circuit 6 receives a code transmission channel switching control signal from a control input terminal 53, and issues an initialization control signal to an initialization circuit 7 in a timing when the switching of the code transmission channel is performed. The intialilization circuit 7, once receiving the intialization control signal, initializes a predetermined memory circuit provided in the speech signal encoder circuit 5.

The foregoing speech signal encoder devices used in the North American and European cellular automobile telephone system are adapted to process a speech signal for each predetermined time interval frame and send a resulting encoded result. The code is specified not only by an input speech signal in a present time frame but also by a processed result of past frames. Contents in a memory circuit, which reflect a processed result of past frames, are therefore initialized.

Such memory circuits include those for short-term predictive filters and short-term analytic filters and long-term analytic filters, and those for storing previous frame codes, and so on. Contents of these memories are initialized. Referring to FIG. 4, there is illustrated in a block diagram an embodiment of the speech signal decoder device 13a, 22a, 42a illustrated FIG. 2. A speech signal decoder circuit 8 decodes the received code inputted through a reception terminal 81 with use of a predetermined decoding process, and transmits a regenerated speech signal to a weighting synthesis circuit 20. The speech signal decoder circuit 8 is of the same construction as that of the prior art speech signal decoder circuit 13 illustrated in FIG. 1.

A control circuit 30 receives a code transmission channel switching control signal from a control input terminal 83 and issues an extrapolation control signal to an extrapolation circuit 9 in a predetermined interval when the code transmission channel is switched. The extrapolation circuit 9 estimates an extrapolated speech signal in an interval when the extrapolation control signal is inputted, on the basis of past received codes.

For such extrapolation of a speech signal, varieties of techniques are widely known and useable. There is for example available an extrapolation technique disclosed in "Lost Frame Substitution and Muting (GSM Full Rate Speech Transcoding)" (CEPT/CCH/GSM Recommendation 06, 11.5 July 1989).

In the extrapolation technique disclosed in the above reference, a pitch component enjoys a previous frame code as it is, and an excitation signal employs itself but including fine variations added thereto in conformity with a predetermined technique. Hereby, a speech signal is regenerated. This originates from a knowledge that feature parameters of a speech signal such as a spectral envelope and a pitch component among feature parameters of the same are less varied in such a short-term interval as across an interface between adjacent frames. Use, however, of quite the same set of the speech regeneration parameters causes a problem of a regenerated speech being mechanical, and hence the excitation signal includes randomness of a certain kind added thereto.

The control circuit 30 issues an initialization control signal to the initialization circuit 10 in a timing of the code transmission channel being switched. The initialization circuit 10, once receiving the initialization control signal, initializes a predetermined memory circuit disposed in the speech signal decoder circuit 8.

In the foregoing speech signal decoder device used in the North American telephone systems, a speech is processed for each predetermined length frame to initialize contents in a memory in which decoding data concerning past frames have been stored.

A weighting synthesis circuit 20 transfers the regenerated speech signal from the decoder circuit 8 intactly to the output terminal 82 with no extrapolation control signal being issued, and weight-synthesizes the extrapolation signal from the exterpolation circuit 9 and the regenerated speech signal from the decoder circuit 8 and outputs a resulting weighted, synthesized signal to the output terminal 82 in the time interval the extrapolation control signal is issued.

It is now assumed that the regenerated speech signal from the decoder circuit 8 is $x(n)$, the extrapolation signal from the extrapolation circuit 9 is $y(n)$, and the output signal from the weighting synthesis circuit 20 is $z(n)$. These signals $x(n)$, $y(n)$, $z(n)$ are discrete, and with $n$ and $T$ each assumed to be integers and a sampling period, present time $t$ is expressed by a relation $t=nT$.

The weighting-synthesis circuit 20 outputs intactly the regenerated signal $x(n)$ from the decoder circuit 8, which signal $x(n)$ satisfies an equation $z(n)=x(n)$, , when no extrapolation control signal is issued from the control circuit 30.

The weighting-synthesis circuit 20 takes $x(n)$ and $y(n)$ as inputs thereto once the extrapolation control signal is issued, and outputs the following function:

$$z(n)=f(n-n0)x(n)+\{1-f(n-n0)\}y(n),$$

where the interpolation control signal is assumed to be inputted to the weighting synthesis circuit 20 when $n=n0$ is satisfied. Herein, $f(n)$ is a predetermined function, say,

$$n<0...f(n)=0$$

$$0<=n<=N...f(n)=n/N$$

$$n<n...f(n)=1$$

where n is a constant indicative of the time interval of the weighting synthesis being done.

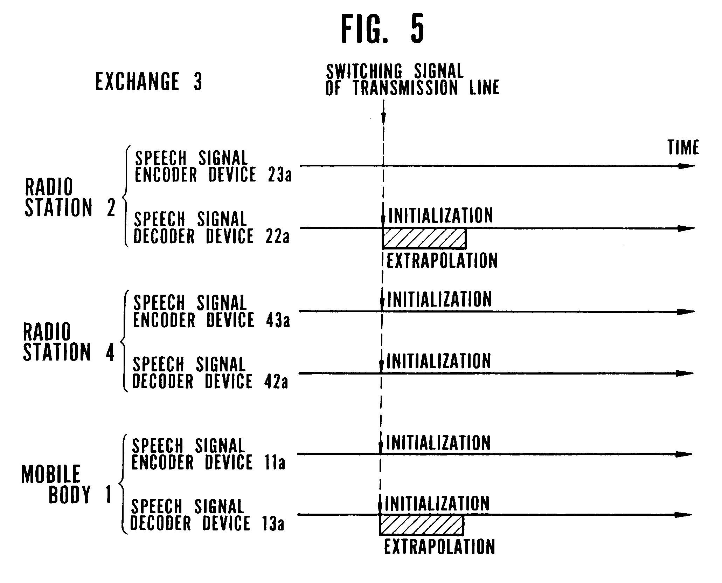

Referring to FIG. 5, there is illustrated a timing chart showing initializations and extrapolation of the encoder device and the decoder device in the mobile body 1 and radio stations 2 and 4 in the above embodiment.

The exchange 3 simultaneously transmits a switching control signal to the speech signal encoder device and the decoder device of the mobile body 1 and the radio stations 2 and 4. The mobile body 1, as receiving the switching signal, initializes the speech signal encoder device while initializing and extrapolating the speech signal decoder device. The speech signal decoder device 22 of the radio station 2 may be initialized and extrapolated. The speech signal encoder device 43 of the radio station 4 may be initialized. The speech signal decoder device 42 of the radio station 4 may be initialized.

It is herein noticed that in the above embodiment the extrapolation circuit 9 obtained the speech extrapolation signal by directly estimating past received codes but in another speech extrapolation technique such an extrapolation signal is estimable using an intermediate result yielded in the course of speech decoding or the regenerated speech signal so that data required for the extrapolation may be transmitted from the speech signal decoder circuit 8 to the extrapolation circuit 9.

According to the present invention, as described above, the influence of past speech codes is eliminated even though the code transmission channel is switched in the middle of a speech where the mobile body is in the course of speech encoding, so that quality of the speech signal is prevented from being deteriorated.

Further, the influence of the past speech code is generated intently even though the code transmission channel is switched in the middle of a speech where the mobile body is in the course of speech decoding, so that a speech signal is prevented from being deteriorated in its quality.

Although in the above embodiment, all speech signal encoder devices lla, 23a and 43a of the mobile body 1 and the radio stations 2 and 4 were initialized and all speech signal decoder devices 13a, 22a and 42a were initialized and extrapolated, in the present invention only the mobile body 1 or only the radio stations 2 and 4 may be intialized or extrapolated. Further, the transmission channel is switchable without deteriorating the quality of a speech signal by performing initialization and extrapolation at least to one of the speech signal encoder device or the speech signal decoder device.

## Claims

1. A speech signal encoder/decoder system in mobile communication comprising a mobile body (1) and a plurality of radio stations, wherein transmission channels between said mobile body (1) and said plurality of radio stations are successively switched whilst said mobile body moves, for communication of encoded speech information,

   said mobile body (1) including:

   a speech signal encoder device (11a) for encoding an input speech signal in conformity with a predetermined encoding process;
   a speech signal decoder device (13a) for decoding an encoded speech signal in conformity with a predetermined decoding procedure; and
   a radio equipment (12);

   said speech signal decoder device (13a) including;

   a memory circuit;
   initialization means (10) for initializing said memory circuit for speech signal decoding in response to the switching of the transmission channels between the mobile body and the radio stations said memory circuit storing decoding data concerning past frames; and
   extrapolation means (9) for extrapolating the speech signal using past received codes in response to the switching of said transmission channels.

2. The speech signal encoder/decoder system according to claim 1,
   said speech signal encoder device (11a) comprising :

   a memory circuit,
   initializing means (7) for initializing said memory circuit for speech signal encoding in response to switching of a transmission channel between the mobile body and the radio stations, said memory circuit reflecting a processed result of past frames.

3. The speech signal encoder/decoder system according to claim 1 or 2,
   wherein each of said radio stations (2, 4) comprises :

   a speech signal encoder device (23a, 43a) for encoding an input speech signal in conformity with a predetermined encoding procedure;
   a speech signal decoder device (22a, 42a) for decoding an encoded speech signal in conformity with a predetermined decoding process; and
a radio equipment (21, 41);

said speech signal encoder device (23a, 43a) including:

a memory circuit;
initialization means (7) for initializing said memory circuit for speech signal encoding in response to the switching of the transmission channels between the mobile body and the radio stations, said memory circuit reflecting a processed result of past frames.

4. The speech signal encoder/decoder system according to claim 3 wherein said speech signal decoder device of said radio stations includes initialization means (10) for intializing the memory circuit for speech signal decoding in response to the switching of the transmission channels between the mobile body and the radio stations, and extrapolation means (9) for extrapolating the speech signal using past received codes in response to the switching of the transmission channels.

5. A speech signal encoder/decoder system according to any of claim 1 to 4 wherein said speech signal decoder device includes a decoder circuit (8) for speech decoding, and synthesis means (20) for weighting an output from the decoder circuit and the extrapolation signal from the extrapolation circuit (9) with a predetermined weighting factor and synthesizing a resulting weighted signal.

**Patentansprüche**

1. Sprachsignalcodierer/decodierersystem in mobiler Kommunikation, mit einer mobilen Einheit (1) und mehreren Funkstationen, wobei Übertragungskanäle zwischen der mobilen Einheit (1) und den mehreren Funkstationen zwecks Kommunikation von codierter Sprachinformation nacheinander umgeschaltet werden, während sich die mobile Einheit bewegt,
wobei die mobile Einheit (1) aufweist:

eine Sprachsignalcodierervorrichtung (11a) zum Codieren eines Eingangssprachsignals entsprechend einem vorbestimmten Codierverfahren;
eine Sprachsignaldecodierervorrichtung (13a) zum Decodieren eines codierten Sprachsignals entsprechend einem vorbestimmten Decodierverfahren; und
eine Funkeinrichtung (12);

wobei die Sprachsignaldecodierervorrichtung (13a) aufweist:

eine Speicherschaltung;
eine Initialisierungseinrichtung (10) zum Initialisieren der Speicherschaltung zur Sprachsignaldecodierung als Antwort auf das Umschalten der Übertragungskanäle zwischen der mobilen Einheit und den Funkstationen, wobei die Speicherschaltung Decodierdaten in bezug auf vorherige Rahmen speichert; und
eine Extrapolationseinrichtung (9) zum Extrapolieren des Sprachsignals unter Verwendung vorher empfangener Codes als Antwort auf das Umschalten der Übertragungskanäle.

2. Sprachsignalcodierer/decodierersystem nach Anspruch 1,
wobei die Sprachsignalcodierervorrichtung (11a) aufweist:

eine Speicherschaltung;
eine Initialisierungseinrichtung (7) zum Initialisieren der Speicherschaltung zur Sprachsignalcodierung als Antwort auf ein Umschalten eines Übertragungskanals zwischen der mobilen Einheit und den Funkstationen, wobei die Speicherschaltung ein verarbeitetes Ergebnis vorheriger Rahmen wiedergibt.

3. Sprachsignalcodierer/decodierersystem nach Anspruch 1 oder 2,
wobei jede der Funkstationen (2, 4) aufweist:

eine Sprachsignalcodierervorrichtung (23a, 43a) zum Codieren eines Eingangssprachsignals entsprechend einem vorbestimmten Codierverfahren;
eine Sprachsignaldecodierervorrichtung (22a, 42a) zum Decodieren eines codierten Sprachsignals entsprechend einem vorbestimmten Decodierverfahren; und
eine Funkeinrichtung (21, 24);

wobei die Sprachsignalcodierervorrichtung (23a, 43a) aufweist:

eine Speicherschaltung;
eine Initialisierungseinrichtung (7) zum Initialisieren der Speicherschaltung zur Sprachsignalcodierung als Antwort auf das Umschalten der Übertragungskanäle zwischen der mobilen Einheit und den Funkstationen, wobei die Speicherschaltung ein verarbeitetes Ergebnis vorheriger Rahmen wiederspiegelt.

4. Sprachsignalcodierer/decodierersystem nach Anspruch 3, wobei die Sprachsignaldecodierervorrichtung der Funkstationen aufweist: eine Initialisierungseinrichtung (10) zum Initialisieren der Speicherschaltung zur Sprachsignaldecodierung als Antwort auf das Umschalten der Übertragungskanäle zwischen der mobilen Einheit und den Funkstationen, und eine Extrapolationseinrichtung (9) zum Extrapolieren des Sprachsignals unter Verwendung vorheriger empfangener Codes als Antwort auf das Umschalten der Übertragungskanäle.

5. Sprachsignalcodierer/decodierersystem nach einem der Ansprüche 1 bis 4, wobei die Sprachsignaldecodierervorrichtung aufweist: eine Decodiererschaltung (8) zur Sprachdecodierung und eine Syntheseeinrichtung (20) zum Wichten eines Ausgangssignals von der Decodiererschaltung und des Extrapolationssignals von der Extrapolationsschaltung (9) mit einem vorbestimmten Wichtungsfaktor und zum Synthetisieren eines resultierenden gewichteten Signals.

## Revendications

1. Système de codage/décodage de signaux de parole dans les télécommunications du service mobile, comprenant un corps mobile (1) et une pluralité de stations radio, les voies de transmission, entre ledit corps mobile (1) et ladite pluralité de stations radio, étant successivement commutées, tandis que ledit corps mobile se déplace, pour la communication d'informations vocales codées,

ledit corps mobile (1) comprenant :

un dispositif de codage de signaux de parole (11a) servant à coder un signal vocal d'entrée suivant un processus prédéterminé de codage ;
un dispositif de décodage de signaux de parole (13a) servant à décoder un signal vocal codé suivant une procédure prédéterminée de décodage ; et
du matériel de radiocommunications (12) ;

ledit dispositif de décodage de signaux de parole (13a) comprenant :

un circuit de mémoire ;
un moyen d'initialisation (10) pour initialiser ledit circuit de mémoire pour le décodage de signaux de parole, en réponse à la commutation des voies de transmission entre le corps mobile et les stations radio, ledit circuit de mémoire contenant des données de décodage concernant des trames passées ; et
un moyen d'extrapolation (9) servant à extrapoler le signal de parole en utilisant les codes reçus précédemment en réponse à la commutation desdites voies de transmission.

2. Système de codage/décodage de signaux de parole selon la revendication 1, ledit dispositif de codage de signaux de parole (11a) comprenant :

un circuit de mémoire ;
un moyen d'initialisation (7) pour initialiser ledit circuit de mémoire pour le codage de signaux de parole, en réponse à la commutation d'une voie de transmission entre le corps mobile et les stations radio, ledit circuit de mémoire étant le reflet d'un résultat de traitement de trames passées.

3. Système de codage/décodage de signaux de parole selon la revendication 1 ou 2, dans lequel chacune desdites stations radio (2, 4) comprend :

un dispositif de codage de signaux de parole (23a, 43a)) servant à coder un signal vocal d'entrée suivant une procédure prédéterminée de codage ;
un dispositif de décodage de signaux de parole (22a, 42a) servant à décoder un signal vocal codé suivant un processus prédéterminé de décodage ; et
du matériel de radiocommunications (21, 41) ;

ledit dispositif de codage de signaux de parole (23a, 43a) comprenant :

un circuit de mémoire ;
un moyen d'initialisation (7) pour initialiser ledit circuit de mémoire pour le codage de signaux de parole, en réponse à la commutation des voies de transmission entre le corps mobile et les stations radio, ledit circuit de mémoire étant le reflet d'un résultat de traitement de trames passées.

4. Système de codage/décodage de signaux de parole selon la revendication 3, dans lequel ledit dispositif de décodage de signaux de parole desdites stations radio comprend un moyen d'initialisation (10) pour initialiser le circuit de mémoire pour le décodage de signaux de parole, en réponse à la commutation des voies de transmission entre le corps mobile et les stations radio, et un moyen d'extrapolation (9) servant à extrapoler le signal de parole en utilisant des codes reçus précédemment en réponse à la commutation des voies de transmission.

5. Système de codage/décodage de signaux de parole selon l'une quelconque des revendications 1 à 4, dans lequel ledit dispositif de décodage de signaux de parole comprend un circuit de décodage (8) pour le décodage de la parole, et un moyen de synthèse (20) pour la pondération d'une sortie provenant du circuit de décodage, et du signal d'extrapolation provenant du circuit d'extrapolation (9), au moyen d'un facteur prédéterminé de pondération, et pour synthétiser un signal pondéré résultant.

FIG. 1

PRIOR ART

EP 0 567 068 B1

FIG. 2

MOBILE BODY 1'

B

RADIO STATION 4

41 RADIO EQUIPMENT

43a SPEECH SIGNAL ENCODER DEVICE

42a SPEECH SIGNAL DECODER DEVICE

3 EXCHANGE

IN

OUT

MOBILE BODY 1

11a SPEECH SIGNAL ENCODER DEVICE

12 RADIO EQUIPMENT

13a SPEECH SIGNAL DECODER DEVICE

14 CONTROL PART

IN

OUT

A

RADIO STATION 2

21 RADIO EQUIPMENT

23a SPEECH SIGNAL ENCODER DEVICE

22a SPEECH SIGNAL DECODER DEVICE

EP 0 567 068 B1

# FIG. 3

11a, 23a, 43a

# FIG. 4

13a, 22a, 42a

# FIG. 5

EXCHANGE 3

SWITCHING SIGNAL
OF TRANSMISSION LINE

TIME

RADIO
STATION 2
- SPEECH SIGNAL ENCODER DEVICE 23a
- SPEECH SIGNAL DECODER DEVICE 22a — INITIALIZATION / EXTRAPOLATION

RADIO
STATION 4
- SPEECH SIGNAL ENCODER DEVICE 43a — INITIALIZATION
- SPEECH SIGNAL DECODER DEVICE 42a — INITIALIZATION

MOBILE
BODY 1
- SPEECH SIGNAL ENCODER DEVICE 11a — INITIALIZATION
- SPEECH SIGNAL DECODER DEVICE 13a — INITIALIZATION / EXTRAPOLATION

EP 0 567 068 B1